# EUROPEAN PATENT APPLICATION

(11) **EP 1 811 680 A1**
(43) Date of publication of application: **25.07.2007**
(21) Application number: 05793623.9
(22) Date of filing: 14.10.2005
(51) Int. Cl.: H04B 1/707, H04Q 7/38

(54) **RADIO BASE STATION, RADIO LINE CONTROL STATION, MOBILE COMMUNICATION SYSTEM, AND MOBILE COMMUNICATION METHOD**

(30) Priority: 15.10.2004 JP 2004302184
(71) Applicant: NTT DoCoMo Inc., Chiyoda-ku Tokyo 100-6150 (JP)
(72) Inventor: USUDA, Masafumi, NTT DoCoMo, Inc, Int. Prop. Dpt, Chiyoda-ku, Tokyo 100-6150 (JP); UMESH, Anil, NTT DoCoMo, Inc, Int. Prop. Dpt, Chiyoda-ku, Tokyo 100-6150 (JP); NAKAMURA, Takehiro, NTT DoCoMo, Inc, Int. Prop. Dpt, Chiyoda-ku, Tokyo 100-6150 (JP)
(74) Representative: HOFFMANN EITLE
(86) International application number: PCT/JP2005/018977
(87) International publication number: WO 2006/041164

(57) **Abstract**

A radio base station related to the present invention includes: a signal storing unit configured to store baseband signals received and over-sampled; a format determining unit configured to determine transport formats of the baseband signals; and a despreader unit configured to despread the baseband signals stored in the signal storing unit, in accordance with the transport formats determined by the format determining unit, after the determination by the format determining unit.

## Description

### [Technical Field]

The present invention relates to a radio base station, a radio network control station, a mobile communication system, and a mobile communication method.

### [Background Art]

A mobile communication system using CDMA (Code Division Multiple Access) as a radio access method is configured to transmit information with a lower bit rate than that at a time when there is voice or no information, at a time of no voice, so as to decrease interference and to improve the capacity of a radio channel in an uplink for voice communication.

Additionally, the mobile communication system is configured to transmit only transmission data of a mobile station in a case where the transmission data is small in volume, or not to transmit data except a control bit and a pilot bit in an interval when a data transmission is not performed, so as to decrease interference and to improve the capacity of a radio channel in an uplink for data communication as well.

Specifically, a plurality of transport formats in each dedicated channel are specified in the 3GPP (3rd Generation Partnership Project).

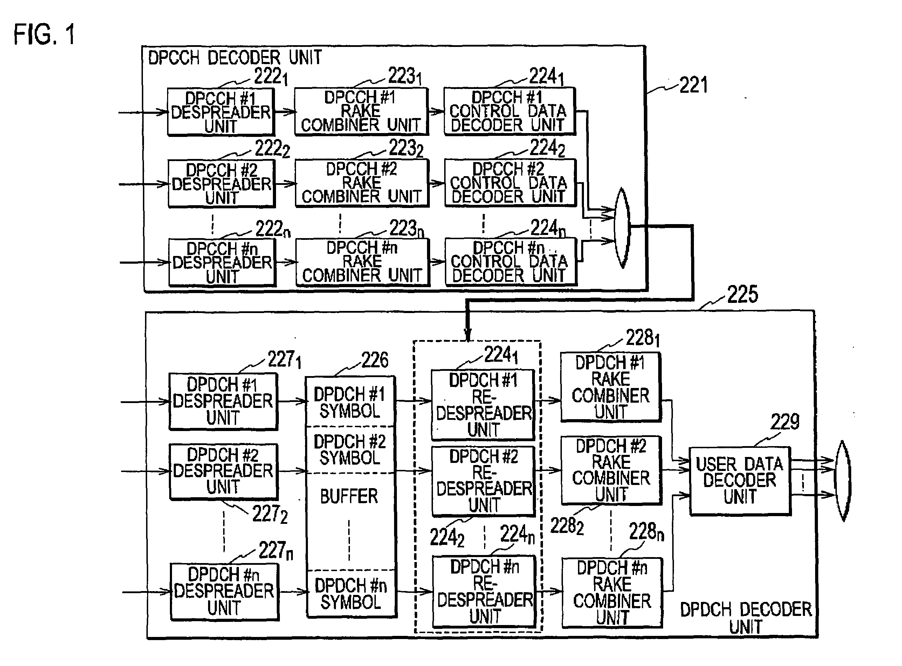

For this reason, as shown in Fig. 1, in the conventional radio base station, a DPDCH #1 despreader unit 227₁ to a DPDCH #n despreader unit 227ₙ of a DPDCH decoder unit 225 are configured to despread user data which are transmitted through DPDCHs (Dedicated Physical Data Channels) at an initial stage of receiving baseband signals, respectively, by use of a minimum spreading factor in a set (TFS: Transport Format Set) of transport formats (TF: Transport Format) set by an upper layer.

Moreover, the DPDCH #1 despreader unit 227₁ to the DPDCH #n despreader unit 227ₙ are configured to store despread data in a buffer 226. Note that the capacity of the buffer 226 is allocated to each DPDCH.

Afterwards, when a DPCCH decoder unit 221 has decoded a TFCI (Transport Format Combination Indicator) mapped in a DPCCH (Dedicated Physical Control Channel), and if the TF shown by the decoded TFCI is not a minimum despreading factor, a DPDCH #1 re-despreader unit 224₁ to a DPDCH #n re-despreader unit 224ₙ are configured to perform re-despreading processing by use of a spreading factor of the TF shown by the TFCI.

In addition, a DPDCH #1 RAKE combiner unit 228₁ to a DPDCH #n combination unit 228ₙ are configured to perform the RAKE combination on re-despread signals, and a user data decoder unit 229 is configured to decode combined signals (for example, see Patent Document 1).

[Patent Document 1] Japanese Patent Application Laid-open Publication No. 2004-179990

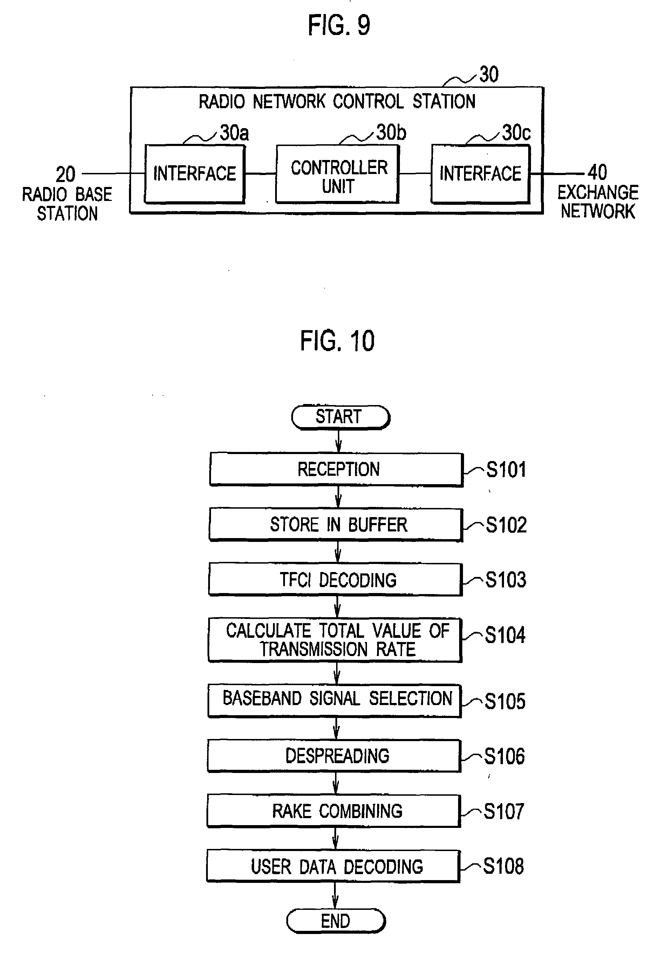

However, a complicated configuration of an apparatus and complicated control as shown in Fig. 10 are required for the conventional radio base station so as to perform the re-despreading processing.

Furthermore, the smaller the minimum spreading factor in a TFS is, the larger the number of symbols of re-despreading signals obtained by use of a minimum spreading factor becomes. Hence, the required capacity of a buffer becomes large. Additionally, the more DPDCHs using a TF whose maximum transmission rate is high are increased, the larger the required capacity of a buffer becomes.

However, since the capacity of a buffer is fixed, the number of mobile stations connectable to a radio base station is limited when a maximum transmission rate is set to be high. Conversely, when the number of connections of mobile stations is increased, there arises a need to decrease a maximum transmission rate.

Although it is possible to increase both the number of connections of mobile stations and a maximum transmission rate if a buffer with a large capacity is provided, it leads to an increase in the size of an apparatus.

In addition, after a TFS with relatively-low maximum transmission rate is first allocated to each channel, it is possible to update a TFS for the channel in which a time that a TF used becomes a maximum transmission rate is long, and then to make a maximum transmission rate high.

In this case, however, there arises a need to negotiate on update of a TFS between a radio base station and a mobile station, which leads to a new problem to cause a need that a radio base station and a radio network control station perform complicated management on the allocation of the capacity of a buffer.

### [Disclosure of the Invention]

Accordingly, the present invention has been made in view of the above points, and an object of the present invention is to provide a radio base station, a radio network control station, a mobile communication system, and a mobile communication method, which are capable to aim at increasing the number of connections of mobile stations without inviting complications to an apparatus configuration and control.

A first aspect of the present invention is summarized as a radio base station including: a signal storing unit configured to store baseband signals received and over-sampled; a format determining unit configured to determine transport formats of the baseband signals; and a despreader unit configured to despread the baseband signals stored in the signal storing unit, in accordance with the transport formats determined by the format determining unit, after the determination by the format determining unit.

In the first aspect of the present invention, the radio base station can further include a signal selector unit configured to calculate the total value of transmission rates of the received baseband signals in accordance with the determined transport formats, and to select the baseband signals to be despreaded in accordance with the total value of the transmission rates; wherein the despreader unit can configured to despread the baseband signals selected by the signal selector unit.

In the first aspect of the present invention, the signal selector unit can configured to despread all baseband signals, when the total value of the transmission rates are less than a total value threshold.

In the first aspect of the present invention, the radio base station can further include a transmission rate controller unit configured to instruct a mobile station to change the transmission rate in accordance with the total value of the transmission rates.

A second aspect of the present invention is summarized as a radio network control station including: a controller unit configured to control at least one of acceptance of a call related to a mobile station or a transmission rate of a received and over-sampled baseband signal which is stored in a signal storing unit included in a radio base station, in accordance with the amount of interference between the radio base station and the mobile station, without using an accumulated amount of the baseband signal storing unit.

A third aspect of the present invention is summarized as a mobile communication system including: a radio base station configured to include a signal storing unit configured to store a received and over-sampled baseband signal,i to determine a transport format of the baseband signal, and to despread the baseband signal stored in the signal storing unit in accordance with the determined transport format after the determination; and a radio network control station configured to control at least one of acceptance of a call related to a mobile station or a transmission rate of the baseband signal, in accordance with the amount of interference between the radio base station and the mobile station without using an accumulated amount of the baseband signal storing unit.

A fourth aspect of the present invention is summarized as a mobile communication method including: storing a received and over-sampled baseband signal in a signal storing unit; determining a transport format of the baseband signal; and despreading the baseband signal stored in the signal storing unit in accordance with the determined transport format after the determination.

### [Brief Descriptions of the Drawings]

[Fig. 1] Fig. 1 is a block diagram showing a configuration of a conventional radio base station.
[Fig. 2] Fig- 2 is a diagram showing a configuration of a mobile communication system according to an embodiment of the present invention.
[Fig. 3] Fig. 3 is a block diagram showing a configuration of a radio base station according to the embodiment of the present invention.
[Fig. 4] Fig. 4 is a block diagram showing a configuration of a transmitting/receiving unit according to the embodiment of the present invention.
[Fig. 5] Fig. 5 (a) to Fig. 5 (f) are diagrams for explaining signal processing in the transmitting/receiving unit according to the embodiment of the present invention.
[Fig. 6] Fig. 6 is a block diagram showing a configuration of a baseband signal processor unit according to the embodiment of the present invention.
[Fig. 7] Fig. 7 is a view showing a DPCCH and a DPDCH according to the embodiment of the present invention.
[Fig. 8] Fig. 8 is a view showing an example of a TFS according to the embodiment of the present invention.
[Fig. 9] Fig. 9 is a view showing a configuration of a radio network control station according to the embodiment of the present invention.
[Fig. 10] Fig. 10 is a flow chart showing a processing procedure of the radio base station according to the embodiment of the present invention.
[Fig. 11] Fig. 11 is a view showing a procedure of an acceptance control over a call of the radio network control station according to the embodiment of the present invention.
[Fig. 12] Fig. 12 is a view showing a procedure of transmission rate control of the radio network control station according to the embodiment of the present invention.

### [Best Mode for Carrying out the Invention]

### [Mobile Communication System]

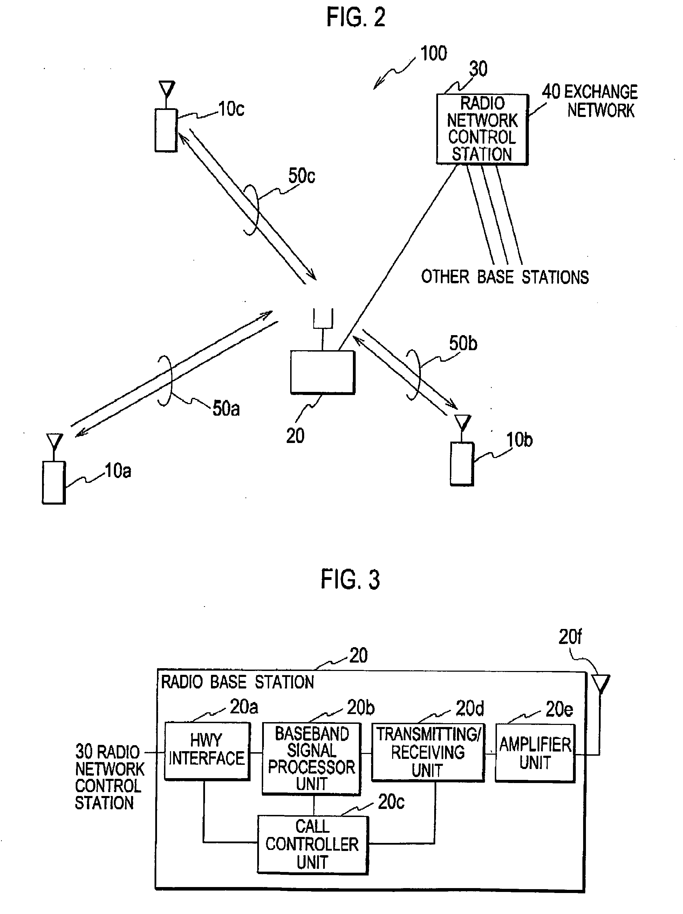

As shown in Fig. 2, a mobile communication system 100 includes a plurality of mobile stations 10a, 10b and 10c, a radio base station 20, a radio network control station 30, and an exchange network 40. The mobile communication system 100 uses the CDMA (Code Division Multiple Access) as a radio access method between the mobile stations 10a to 10c and the radio base station 20.

The mobile stations 10a to 10c transmit/receive user data and control data to/from the radio base station 20 by use of radio channels 50a to 50c, respectively. The radio channels have uplink channels to transmit data from the mobile stations 10a to 10c to the radio base station 20; and downlink channels to transmit data from the radio base station 20 to the mobile stations 10a to 10c. Moreover, the radio channels have a dedicated channel dedicated for each of mobile stations 10a to 10c; and a common channel common to the plurality of mobile stations 10a to 10c.

The radio base station 20 performs radio communication with the mobile stations 10a to 10c. The radio network control station 30 controls radio communication between the mobile stations 10a to 10.c and the radio base station 20. The radio network control station 30 is located in the upper level of the radio base station 20. The exchange network 40 is a core network including an exchange.

Next, descriptions will be given of the configuration of the radio base station 20 in detail. As shown in Fig. 3, the radio base station 20 includes a HWY interface 20a, a baseband signal processor unit 20b, a controller unit 20c, a transmitting/receiving unit 20d, an amplifier unit 20e, and a transmitting/receiving antenna 20f.

The HWY interface 20a is an interface between the radio network control station 30.

Specifically, the HWY interface 20a is configured to receive, from the radio network control station 30, user data to be transmitted to the mobile stations 10a to 10c and a control signal for the radio base station 20.

Furthermore, the HWY interface 20a is configured to input the received user data into the baseband signal processor unit 20b, and to input the received control signal into the controller unit 20c.

Moreover, the HWY interface 20a is configured to transmit, to the radio network control station 30, user data transmitted from the mobile stations 10a to 10c and received by the radio base station 20, by obtaining the user data from the baseband signal processor unit 20b.

Additionally, the HWY interface 20a is configured to transmit a control signal for the radio network control station 30 to the radio network control station 30, by obtaining the control signal from the controller unit 20c.

The controller unit 20c is configured to perform each kind of control such as call control and transmission rate control.

Specifically, the controller unit 20c is configured to generate control data to be transmitted to the mobile stations 10a to 10c, and to input them into the baseband signal processor unit 20b.

In addition, the controller unit 20c is configured to handle a control signal with the radio network control station 30 via the HWY interface 20c.

Moreover, the controller unit 20c is configured to generate control data and to control the mobile stations 10a to 10c, based on a transmission rate from the radio network control station 30 and a control signal related to call processing.

Furthermore, the controller unit 20c is configured to perform the status management of the baseband signal processor unit 20b and the transmitting/receiving unit 20d in the radio base station 20; the allocation of hardware resources by the layer 3; and the like.

The baseband signal processor unit 20b is configured to perform signal processing on user and control data to be transmitted to the mobile stations 10a to 10c, and signal processing on a baseband signal received from the mobile stations 10a to 10c.

Specifically, the baseband signal processor unit 20b is configured to perform, for example, error correction coding, data modulation, spreading, and the like, on data to be transmitted to the mobile stations 10a to 10c.

Additionally, the baseband signal processor unit 20b is configured to perform despreading, RAKE combination, error correction decoding, and the like, on baseband signals received from the mobile stations 10a to 10c.

Note that signal processing performed by the baseband signal processor unit 20b is the signal processing performed in the layer 1.

The baseband signal processor unit 20b is configured to perform signal processing by obtaining user data from the HWY interface 20a and control data from the controller unit 20c, and then to input a baseband signal, on which the signal processing has been performed, into the transmitting/receiving unit 20d.

Furthermore, the baseband signal processor unit 20b is configured to obtain the baseband signal received from the transmitting/receiving unit 20d; to input user data, on which the signal processing has been performed, into the HWY interface 20a; and to input control data, on which the signal processing has been performed, into the controller unit 20c.

The transmitting/receiving unit 20d is configured to transmit/receive user data and control data to/from the mobile stations 10a to 10c by radio.

In addition, the transmitting/receiving unit 20d is configured to obtain, from the baseband signal processor unit 20b, baseband signals to be transmitted to the mobile stations 10a to 10c, and to convert the baseband signals to signals in a radio frequency band.

Moreover, the transmitting/receiving unit 20d is configured to input converted signals into the amplifier unit 20e, and to transmit the signals to the mobile stations 10a to 10c via the amplifier unit 20e and the transmitting/receiving antenna 20f.

Additionally, the transmitting/receiving unit 20d is configured to receive signals from the mobile stations 10a to 10c via the transmitting/receiving antenna 20f and the amplifier unit 20e.

Moreover, the transmitting/receiving unit 20d is configured to convert a received signal into a baseband signal, and to input the signal into the baseband signal processor unit 20b.

Furthermore, the transmitting/receiving unit 20d is configured to measure the amount of interference in the radio channels 50a to 50c with the mobile stations 10a to 10c.

Here, it is possible for the transmitting/receiving unit 20d to measure, for example, interference power, CIR (Carrier to Interference Ratio), SIR (Signal to Interference Ratio), SN (Signal to Noise), and the like, as an interference amount. Then, the transmitting/receiving unit 20d is configured to input the measured value of the interference amount into the controller unit 20c.

The amplifier unit 20e is configured to obtain from the transmitting/receiving unit 20d signals to the mobile stations 10a to 10c, to amplify the obtained signals, and to transmit the signals to the mobile stations 10a to 10c via the transmitting/receiving antenna 20f.

Moreover, the amplifier unit 20e is configured to amplify a signal received by the transmitting/receiving antenna 20f, and to input the signal into the transmitting/receiving unit 20d.

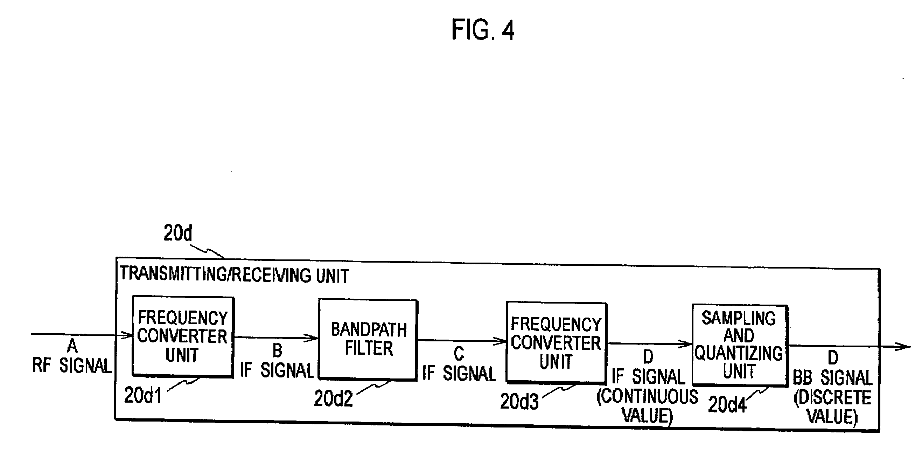

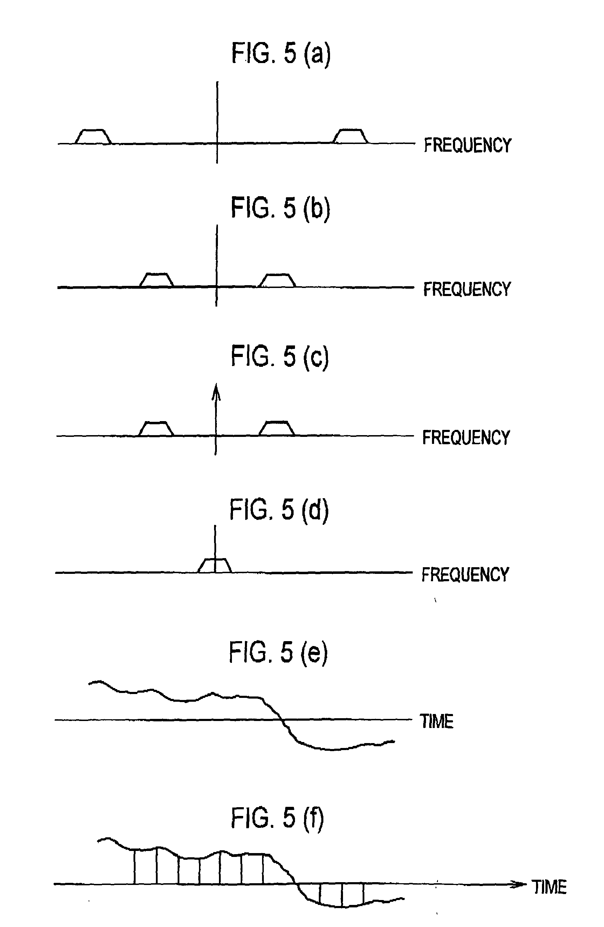

With reference to Figs. 4 and 5, more detailed descriptions will be given of the transmitting/receiving unit 20d. As shown in Fig. 4, the transmitting/receiving unit 20d includes a frequency converter unit 20dl, a bandpath filter 20d2, a frequency converter unit 20d3, and a sampling and quantizing unit 20d4.

The frequency converter unit 20d1 is configured to downconvert an RF signal A (refer to Fig. 5 (a)) received from the antenna 20f and the amplifier unit 20e, from a radio frequency band to an intermediate frequency band, and then to output an IF signal B (refer to Fig. 5 (b)).

The bandpath filter 20d2 is configured to extract, from the IF signal B, only signals of a frequency in which a desired signal is overlapped, and to output an IF signal C (refer to Fig. 5 (c)).

The frequency converter unit 20d3 is configured to convert the IF signal C to an IF signal (a continuous value) D which is a continuous analog baseband signal (refer to Figs. 5 (d) and 5 (e)), and then to output the signal.

The sampling and quantizing unit 20d4 is configured to convert the IF signal (a continuous value) D to a BB signal (a discrete value) E which is a discrete digital baseband signal (refer to Fig. 5 (f)), and then to output the signal.

In this manner, the transmitting/receiving unit 20d generates an over-sampled baseband signal, and stores the signal in a buffer 26 of the baseband signal processor unit 20b.

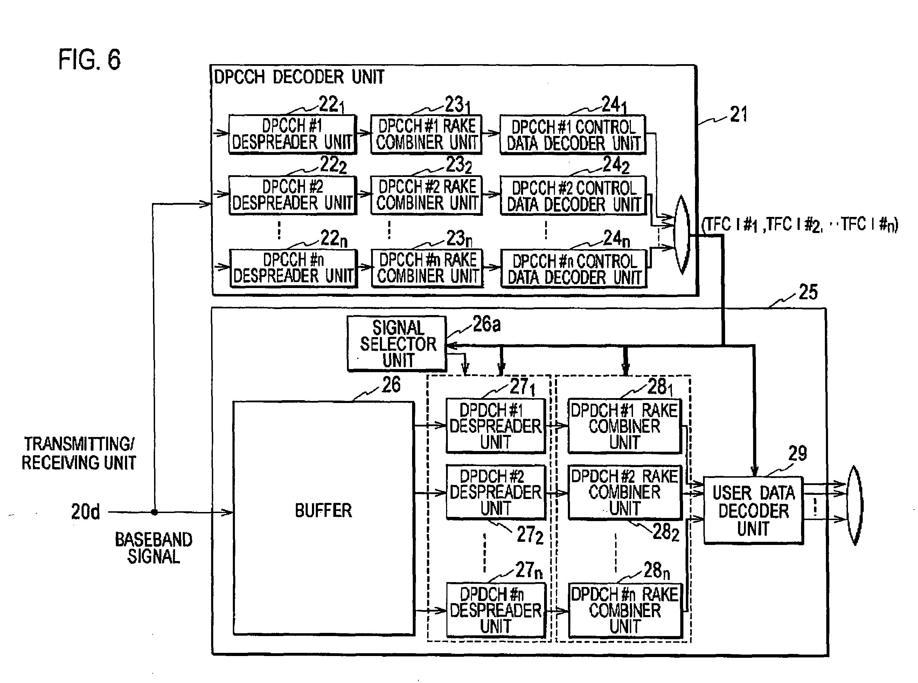

Next, more detailed descriptions will be given of the baseband signal processor unit 20b. Fig. 6 shows a receiving function part in the baseband signal processor unit 20b. As shown in Fig. 6, the baseband signal processor unit 20b includes a DPCCH decoder unit 21 and a DPDCH decoder unit 25.

The DPCCH decoder unit 21 is configured to process a baseband signal including control data received by a DPCCH (Dedicated Physical data Channel).

The DPDCH decoder unit 25 is configured to process a baseband signal including user data received by a DPDCH (Dedicated Physical Control Channel).

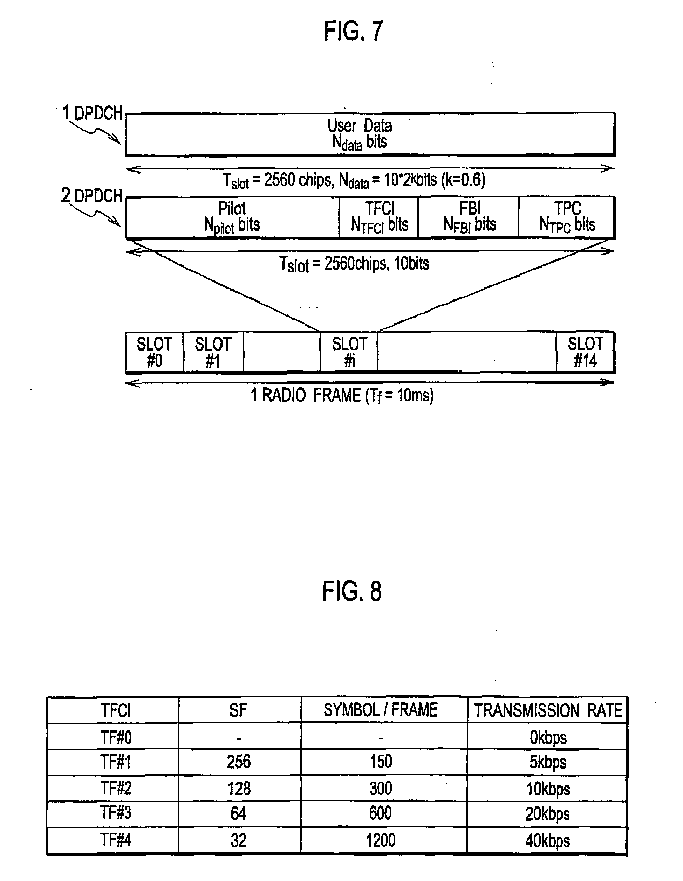

The DPCCH and the DPDCH are dedicated channels which are dedicated to the mobile stations 10a to 10c, respectively, and are uplink channels. Fig. 7 shows the configurations of a DPDCH 1 and a DPCCH 2 (refer to the 3GPP TS 25.211 V5.5.0).

As shown in Fig. 7, one radio frame (Tf = 10 ms) is divided into 15 slots of #0 to #14 (T slot = 2560 chips, 10 bits).

The DPCCH 2 is used for transmitting control data. For example, a pilot symbol (Pilot), a TFCI (Transport Format Combination Indicator), feedback information (FBI), a transmission power control instruction (TPC), and the like are mapped as control data in the DPCCH 2.

The DPDCH 1 is used for transmitting user data. User data is mapped in the DPDCH 1.

Here, the TFCI is a transport format identifier indicating a transport format (TF: Transport Format) of user data.

Fig. 8 shows an example of a set of transport formats (TF) (TFS: Transport Format Set). Fig. 8 shows a TFS in which a maximum transmission rate is 40 kbps.

Moreover, in the example of Fig. 8, as is the case with the W-CDMA standardized in the 3GPP: a chip rate is set to 3.84 Mbps; an error correction coding rate is set to one-third; a modulation system is set to BPSK (Binary Phase shift Keying); and an error correction coding unit (frame) is 10 ms.

The TFS shown in Fig. 8 has 5 types of transport formats (TF). "TFCI : TF #0" shows a case where there is no transmission of user data. The transport format (TF) is stipulated by a spreading factor (SF: Spreading Factor), the number of symbols (symbol/frame) per radio frame, and a transmission rate. A TFCI is added to each transport format (TF).

Transport formats (TF) are selected by the mobile stations 10a to 10c, based on the amount of data accumulated in transmission buffers of the mobile stations 10a to 10c.

For example, when there are no user data in the transmission buffer, "TFCI : TF #0" is selected. When the large amount (for example, 1 Mbits) of user data is accumulated in the transmission buffer, "TFCI : TF #4" whose maximum transmission rate is 40 kbps is selected.

The mobile stations 10a to 10c transmit TFCIs indicating transport formats (TF) used in an outband manner by using DPCCH2.

A baseband signal before despreading, which is received and over-sampled by the transmittzng/receiving unit 20d through the DPCCH, is inputted in the DPCCH decoder unit 21 shown in Fig. 6.

In this manner, a baseband signal is branched into the DPDCH including user data and the DPCCH including control data, and both of them are processed respectively.

The DPCCH decoder unit 21 includes a DPCCH #1 despreader unit 22₁ to a DPCCH #n despreader unit 22ₙ; a DPCCH #1 RAKE combiner unit 23₁ to a DPCCH #n RAKE combiner unit 23ₙ; and a DPCCH #1 control data decoder unit 24₁ to a DPCCH #n control data decoder unit 24ₙ.

The DPCCH #1 despreader unit 22₁ to the DPCCH #n despreader unit 22ₙ, the DPCCH #1 RAKE combiner unit 23₁ to the DPCCH #n RAKE combiner unit 23ₙ, and the DPCCH #1 control data decoder unit 24₁ to the DPCCH #n control data decoder unit 24ₙ are provided for each of DPCCH #1 to DPCCH #n.

Each of the DPCCH #1 despreader unit 22₁ to the DPCCH #n despreader unit 22ₙ is configured to despread baseband signals received through the DPCCH #1 to the DPCCH #n.

Furthermore, the DPCCH #1 despreader unit 22₁ to the DPCCH #n despreader unit 22ₙ are configured to input a plurality of symbols obtained due to despreading, into the DPCCH #1 RAKE combiner unit 23₁ to the DPCCH #n RAKE combiner unit 23ₙ, respectively.

The DPCCH #1 RAKE combiner unit 23₁ to the DPCCH #n RAKE combiner unit 23ₙ are configured to perform the RAKE combination on symbols inputted from the DPCCH #1 despreader unit 22₁ to the DPCCH #n despreader unit 22ₙ, respectively.

The DPCCH #1 RAKE combiner unit 23₁ to the DPCCH #n RAKE combiner unit 23ₙ are configured to input combined control signals into the DPCCH #1 control data decoder unit 24₁ to the DPCCH #n control data decoder unit 24ₙ, respectively.

The DPCCH #1 control data decoder unit 24₁ to the DPCCH #n control data decoder unit 24ₙ are configured to decode control signals inputted from the DPCCH #1 RAKE combiner unit 23₁ to the DPCCH #n RAKE combiner unit 23ₙ, respectively, and to obtain control data.

Thus, the respective TFCI #1 to the TFCI #n of the DPCCH #1 to the DPCCH #n, which are connected to the radio base station 20, are decoded.

As described above, the DPCCH decoder unit 21 obtains a TFCI indicating a transport format (TF) from a baseband signal received through the DPCCH, and determines the transport format (TF).

In this manner, the DPCCH decoder unit 21 functions as a format determining unit configured to determine a transport format (TF) of a baseband signal received by the transmitting/receiving unit 20d.

The DPCCH #1 control data decoder unit 24₁ to the DPCCH #n control data decoder unit 24ₙ are configured to input control data including the TFCI #1 to the TFCI #n into the DPDCH decoder unit 25.

The DPDCH decoder unit 25 includes: the buffer 26; a signal selector unit 26a; a DPDCH #1 despreader unit 27₁ to a DPDCH #n despreader unit 27ₙ; a DPDCH #1 RAKE combiner unit 28₁ to a DPDCH #n RAKE combiner unit 28ₙ; and a user data decoder unit 29.

The buffer 26 is a signal storing unit configured to store a baseband signal received by the transmitting/receiving unit 20d through the DPDCH. Note that the transmitting/receiving unit 20d is configured to store a baseband signal before spreading, which is received through the DPDCH and is over-sampled, into the buffer 26.

The buffer 26 is configured to hold (buffer) a baseband signal for more than a TTI (Transmit Timing Interval) of the DPDCH. Here, a TTI is a time length of a transmission block.

The DPDCH #1 despreader unit 27₁ to the DPDCH #n despreader unit 27ₙ and the DPDCH #1 RAKE combiner unit 28₁ to the DPDCH #n RAKE combiner unit 28ₙ are provided for each of a DPDCH #1 to a DPDCH #n.

The DPDCH #1 despreader unit 27₁ to the DPDCH #n despreader unit 27ₙ and the DPDCH #1 RAKE combiner unit 28₁ to the DPDCH #n RAKE combiner unit 28ₙ are configured to obtain the control data of the DPCCH #1 to the DPCCH #n corresponding to the DPDCH #1 to the DPDCH #n, respectively, from the DPCCH decoder unit 21.

The DPDCH #1 despreader unit 27₁ to the DPCCH #n despreader unit 27ₙ, the DPCCH #1 RAKE combiner unit 28₁ to the DPCCH #n combination unit 28ₙ, and the user data decoder unit 29 are configured to obtain decoded control data from the DPCCH decoder unit 21, and then to perform processing by use of the obtained control data.

In other words, the DPDCH #1 despreader unit 27₁ to the DPDCH #n despreader unit 27ₙ, the DPCCH #1 RAKE combiner unit 28₁ to the DPDCH #n RAKE combiner unit 28ₙ, and the user data decoder unit 29 are configured to perform the processing of despreading, RAKE combination, and error correction decoding, after a TFCI is determined as control data.

Furthermore, the DPDCH #1 despreader unit 27₁ to the DPDCH #n despreader unit 27ₙ, the DPDCH #1 RAKE combiner unit 28₁ to the DPDCH #n RAKE combiner unit 28ₙ, the user data decoder unit 29, and the signal selector unit 26a are configured to previously hold information regarding a TFS as shown in Fig. 8.

Then, the DPDCH #1 despreader unit 27₁ to the DPDCH #n despreader unit 27ₙ, the DPDCH #1 RAKE combiner unit 28₁ to the DPDCH #n RAKE combiner unit 28ₙ, the user data decoder unit 29, and the signal selector unit 26a can obtain the contents of specific transport formats (TF) shown by the TFCI #1 to the TFCI #n, by referring to TFSs held.

The DPDCH #1 despreader unit 27₁ to the DPDCH #n despreader unit 27ₙ are configured to despread baseband signals received through the DPDCH #1 to the DPDCH #n, respectively.

Additionally, the DPDCH #1 despreader unit 27₁ to the DPDCH #n despreader unit 27ₙ are configured to perform despreading by use of the TFCI #1 to the TFCI #n included in the control data of the DPCCH #1 to the DPCCH #n obtained by the DPCCH decoder unit 21, respectively.

Specifically, the DPDCH #1 despreader unit 27₁ to the DPDCH #n despreader unit 27ₙ perform despreading by use of a spreading factor (SF) of a transport format (TF) shown by the TFCI #1 to the TFCI #n.

The DPDCH #1 despreader unit 27₁ to the DPDCH #n despreader unit 27ₙ are configured to obtain baseband signals received from the buffer 26 through the DPDCH #1 to the DPDCH #n, respectively, after obtaining the TFCI #1 to the TFCI #n from the DPCCH decoder unit 21.

Moreover, the DPDCH #1 despreader unit 27₁ to the DPDCH #n despreader unit 27ₙ are configured to perform despreading by extracting sampling data, respectively, in accordance with transport formats (TF) shown by the TFCI #1 to the TFCI #n.

In this manner, the DPDCH #1 despreader unit 27₁ to the DPDCH #n despreader unit 27ₙ function as despreader units which despread baseband signals stored in the buffer 26, in accordance with transport formats (TF) shown by the TFCIs determined by the DPCCH decoder unit 21, after the determination of the transport formats (TF) by the DPCCH decoder unit 21.

Moreover, the DPDCH #1 despreader unit 27₁ to the DPDCH #n despreader unit 27ₙ are configured to input a plurality of symbols obtained by despreading into the DPDCH #1 RAKE combiner unit 28₁ to the DPDCH #n RAKE combiner unit 28ₙ, respectively.

The DPDCH #1 RAKE combiner unit 28₁ to the DPDCH #n RAKE combiner unit 28ₙ are configured to perform the RAKE combination on symbols inputted by the DPDCH #1 despreader unit 27₁ to the DPCCH #n despreader unit 27ₙ, respectively.

The DPDCH #1 RAKE combiner unit 28₁ to the OPDCH #n RAKE combiner unit 28ₙ are configured to perform the RAKE combination in accordance with transport formats (TF) shown by the TFCI #1 to the TFCI #n obtained by the DPCCH decoder unit 21, respectively.

The DPDCH #1 RAKE combiner unit 28₁ to the DPDCH #n RAKE combiner unit 28ₙ are configured to input combined user data into the user data decoder unit 29.

The user data decoder unit 29 is configured to perform the error correction decoding on user data signals inputted from the DPDCH #1 RAKE combiner unit 28₁ to the DPDCH #n RAKE combiner unit 28ₙ, and then to obtain user data.

Specifically, the user data decoder unit 29 is configured to perform the error correction decoding on the user data signals of the respective DPDCH, in accordance with transport formats (TF) shown by the TFCI #1 to the TFCI #n obtained from the DPCCH decoder unit 21.

Furthermore, the user data decoder unit 29 is configured to input decoded user data into the HWY interface 20a. Here, user data are transferred to an upper layer function.

At this point, the signal selector unit 26a may obtain the TFCI #1 to the TFCI #n corresponding to the DPDCH #1 to the DPDCH #n, from the DPCCH decoder unit 21.

Moreover, the signal selector unit 26a is configured to calculate the total value of transmission rates of baseband signals received in response to determined transport formats (TF).

In addition, the signal selector unit 26a is configured to select a baseband signal on which despreading is performed, in accordance with the total value of a transmission rate.

Furthermore, the signal selector unit 26a is configured to determine the transmission rates of transport formats (TF) shown by the TFCI #1 to the TFCI #n, in accordance with the obtained TFCI #1 to the TFCI #n. With this, it is possible for the signal selector unit 26a to determine the transmission rate of a baseband signal received by the transmitting/receiving unit 20d through each of the DPDCH #1 to the DPDCH #n.

In addition, the signal selector unit 26a is configured to calculate the total value of transmission rates of received baseband signals. In other words, the signal selector unit 26a is configured to calculate the total value of baseband signals received through the respective DPDCH #1 to the DPDCH #n.

Furthermore, the signal selector unit 26a is configured to previously hold the threshold value of the total value of transmission rates (hereinafter, referred to as "a total value threshold") for determining whether or not to perform signal processing on all baseband signals received through the DPDCH #1 to the DPDCH #n.

The total value threshold of transmission rates can be stipulated according to at least one of the processing capacities and the like of the DPDCH #1 despreader unit 27₁ to the DPDCH #n despreader unit 27ₙ, the DPDCH #1 RAKE combiner unit 28₁ to the DPDCH #n RAKE combiner unit 28ₙ, and the user data decoder unit 29.

The signal selector unit 26a is configured to compare the total value with total value threshold of transmission rates.

Here, the signal selector unit 26a is configured to determine to perform signal processing on all baseband signals received through the DPDCH #1 to the DPDCH #n, and then to select all the baseband signals as a baseband signal to be despreaded, in a case where the total value of transmission rates is less than the total value threshold.

Moreover, the signal selector unit 26a is configured to determine all baseband signals received through the DPDCH #1 to the DPDCH #n, and then to select the baseband signals through some of the DPDCHs as a baseband signal to be despreaded, in a case where the total value of transmission rates is equal to the total value threshold or more.

The signal selector unit 26a may randomly select a baseband signal to be despreaded, may select a baseband signal in accordance with a previously stipulated priority order of the DPDCHs, or may select a baseband signal in order in accordance with a previously stipulated selection order of the DPDCHs.

The signal selector unit 26a is configured to control the DPDCH #1 despreader unit 27₁ to the DPOCH #n despreader unit 27ₙ in accordance with the result of selection. Specifically, the signal selector unit 26a instructs the DPDCH #1 despreader unit 27₁ to the DPDCH #n despreader unit 27ₙ, which process a selected baseband signal of the DPDCH, to perform despreading.

In this case, the DPDCH #1 despreader unit 27₁ to the DPDCH #n despreader unit 27ₙ can perform despreading only when having received an instruction from the signal selector unit 26a.

In this manner, the DPDCH #1 despreader unit 27ⱼ to the DPDCH #n despreader unit 27ₙ despread baseband signals selected by the signal selector unit 26a. Then, only the ones which performed despreading out of the DPDCH #1 despreader unit 27₁ to the DPDCH #n despreader unit 27ₙ input despread symbols into the DPDCH #1 RAKE combiner unit 28₁ to the DPDCH #n RAKE combiner unit 28ₙ.

For this reason, the DPDCH #1 RAKE combiner unit 28₁ to the DPDCH #n RAKE combiner unit 28ₙ, too, are to perform the RAKE combination only on baseband signals selected by the signal selector unit 26a. Similarly, the user data decoder unit 29, too, performs the error correction decoding only on baseband signals selected by the signal selector unit 26a.

Note that it is preferable that the DPDCH decoder unit 25 should decide the total value threshold of transmission rates, based on the maximum value of processible data amount, in accordance with the processing capacities of the DPDCH #1 despreader unit 27₁ to the DPDCH #n despreader unit 27ₙ, the DPDCH #1 RAKE combiner unit 28₁ to the DPDCH #n RAKE combiner unit 28ₙ, and the user data decoder unit 29.

In this manner, the signal selector unit 26a can select baseband signals to be despreaded through the DPDCHs, and perform the processing of despreading, RAKE combination, error correction coding only on selected baseband signals received through the DPDCHs, in a case where the processing of despreading, RAKE combination, and error correction coding cannot be performed on all baseband signals received through the DPDCHs.

With this, the signal selector unit 26a can select only the amount of baseband signals which the DPDCH decoder unit 25 can process at its maximum. Accordingly; the radio base station 20 can decode user data as much as possible, by making the maximum use of hardware resource provided for itself.

Hence, baseband signals which have not been selected by the signal selector unit 26a are not decoded, thus causing a loss of the user data thereof. However, the radio base station 20 can reduce such a loss of user data as much as possible.

Incidentally, user data received in a state where the total value of transmission rates is equal to the total value threshold or more are likely to have a large amount of interference (noise rise). Hence, there is a high possibility that the probability of success of error correction coding is lower than usual. Thus, a small loss of user data is not considered to be a serious problem.

Furthermore, the signal selector unit 26a may determine whether or not a state where the total value of transmission rates is equal to the total value threshold or more is continuing, in accordance with the comparison between the total value and total value threshold of transmission rates.

In other words, the signal selector unit 26a may determine whether or not a state where the total value of transmission rates of baseband signals received through the DPDCH #1 to the DPDCH #n exceeds the processing capacities of despreading, RAKE combination, error correction coding of the radio base station 20 is continuing.

For example, the signal selector unit 26a may measure the number and time that the total value of transmission rates is equal to the total value threshold or more, and determine that such a state is continuing, when the measured value exceeds the previously stipulated number and time.

In such a case, when having determined that the state where the total value of transmission rates is equal to the total value threshold or more is continuing, the signal selector unit 26a informs the controller unit 20c by inputting the determination result therein.

The controller unit 20c instructs the mobile stations 10a to 10c to change transport formats (TF) used, when receiving, from the signal selector unit 26a, the information that the state where the total value of the transmission rates is equal to the threshold value or more is continuing.

For example, the controller unit 20c instructs to change a TFS used. Accordingly, the controller unit 20c can change a transport format (TF) used by each of the DPDCH #1 to the DPDCH #n, and can change a transmission rate of a baseband signal.

For example, the controller unit 20c instructs to use a transport format (TF) which is higher in a transmission rate than a transport format (TF) currently used.

In this manner, the controller unit 20c can function as a transmission rate controller unit configured to instruct a mobile station to change a transmission rate according to the total value of transmission rates, by instructing a change of a transport format (TF) based on the information from the signal selector unit 26a that the state where the total value of transmission rates is equal to the total value threshold or more is continuing.

With this, when the amount of interference (noise rise) exceeds a permitted value, it is possible to change the transport format (TF) of a baseband signal transmitted through each DPDCH due to the radio network control function, and to change a transmission rate.

Note that when the amount of interference is equal to the permitted value or less, it is preferable to secure hardware resources of the DPDCH #1 despreader unit 27₁ to the DPDCH #n despreader unit 27ₙ, the DPDCH #1 RAKE combiner unit 28₁ to the DPDCH #n RAKE combiner unit 28ₙ, and the user data decoder unit 29, in order to avoid a situation in which the resources for the processing of despreading, RAKE combination, and error correction coding are insufficient.

Additionally, each configuration of the baseband signal processor unit 20b shown in Fig. 6 may be divided as hardware, or may be divided by programs on a processor as software and a process.

Then, more detailed descriptions will be given of the radio network control station 30. As shown in Fig. 9, the radio network control station 30 includes an interface 30a, a controller unit 30b, and an interface 30c.

The interface 30a is an interface with the radio base station 20. The interface 30a is configured to transmit/receive a control signal and user data to/from the radio base station 20.

The interface 30c is an interface with the exchange network 40. The interface 30c is configured to transmit/receive user data and a control signal to/from the exchange network 40.

The controller unit 30b is configured to accept calls related to the mobile stations 10a to 10c and to control the transmission rate of a baseband signal, in accordance with the amount of interference between the radio base station 20 and the mobile stations 10a to 10c, without using an accumulation amount of the buffer 26 provided for the radio base station 20.

The controller unit 30b is configured to accept calls and to control the transmission rate of a baseband signal, in accordance with the amount of interference in the uplink channel (uplink interference amount), for example.

The controller unit 30b is configured to control the acceptance of incoming calls and out going calls, when the radio network control station 30 is informed by the radio base station 20 of incoming calls from the mobile stations 10a to 10c being in the coverage area thereof, and when the radio network control station 30 is informed by the exchange network 40 of out going calls to the mobile stations 10a to 10c.

The controller unit 30b is configured to hold the threshold value of an interference amount for determining whether or not the acceptance of calls is permitted (hereinafter, referred to as "an acceptance threshold"). Parameters indicating an interference amount are interference power, CIR, SIR, a SN ratio, and the like, for example.

The controller unit 30b is configured to receive the measured value of an interference amount from the radio base station 20. In the radio base station 20, the transmitting/receiving unit 20d measures the amount of interference, and the controller unit 20c generates a control signal including the measured value of the interference amount and transmits the control signal to the radio network control station 30.

The controller unit 30b is configured to compare the measured value with the acceptance threshold of the interference amount.

Specifically, the controller unit 30b is configured to permit the acceptance of incoming and out going calls when the measured value of the interference amount is less than the acceptance threshold. On the other hand, the controller unit 30b is configured to reject the acceptance of incoming and out going calls when the measured value of the interference amount is equal to the acceptance threshold or more.

The controller unit 30b is configured to generate control signals related to control over call acceptance such as the permission and rejection of call acceptance, and to transmit the control signals to the radio base station 20 and the exchange network 40 via the interfaces 30a and 30c.

The controller unit 30b is configured to generate a control signal to instruct the radio base station 20 to set the DPDCH and the DPCCH, when permitting the acceptance of a call.

Te controller unit 30b is configured to hold the threshold value of the interference amount to determine whether or not to change a transmission rate (hereinafter, referred to as "a change threshold").

The controller unit 30b is configured to compare the measured value with change threshold of the interference amount. Specifically, the controller unit 30b is configured not to change a transmission rate when the measured value of the interference amount is less than the change threshold. On the other hand, the controller unit 30b is configured to change a transmission rate when the measured value of the interference amount is equal to the change threshold or more.

The controller unit 30b is configured to generate a control signal to instruct a change of a transmission rate, and to transmit the control signal to the radio base station 20 via the interface 30a.

The controller unit 30b is configured to generate a control signal to instruct a change of a transport format (TF), when changing a transmission rate. For example, the controller unit 30b is configured to instruct a change of a TFS.

### [Mobile Communication Method]

Next, descriptions will be given of the procedure of the mobile communication method. Fig. 10 shows a processing procedure of the radio base station 20.

As shown in Fig. 10, in Step S101, the radio base station 20 receives baseband signals including control data from the mobile stations 10a to 10c through the DPCCHs, and receives baseband signals including user data from the mobile stations 10a to 10c through the DPDCHs.

In Step S102, the radio base station 20 stores baseband signals received through the DPDCHs in the buffer 26.

In Step S103, the radio base station 20 decodes TFCIs from the baseband signals received through the DPCCHs, and determines the transport formats (TF) of the baseband signals.

In Step S104, the radio base station 20 calculates the total value of transmission rates of baseband signals received, in accordance with the determined transport formats.

In Step S105, the radio base station 20 selects baseband signals to be despreaded, in accordance with the total value of transmission rates.

In Step S106, the radio base station 20 performs despreading on the baseband signals selected from among the baseband signals received through the DPDCHs and stored in the buffer 26, in accordance with the determined transport formats (TF).

The radio base station 20 performs the RAKE combination on despread symbols in Step S107, and decodes user data in Step S108.

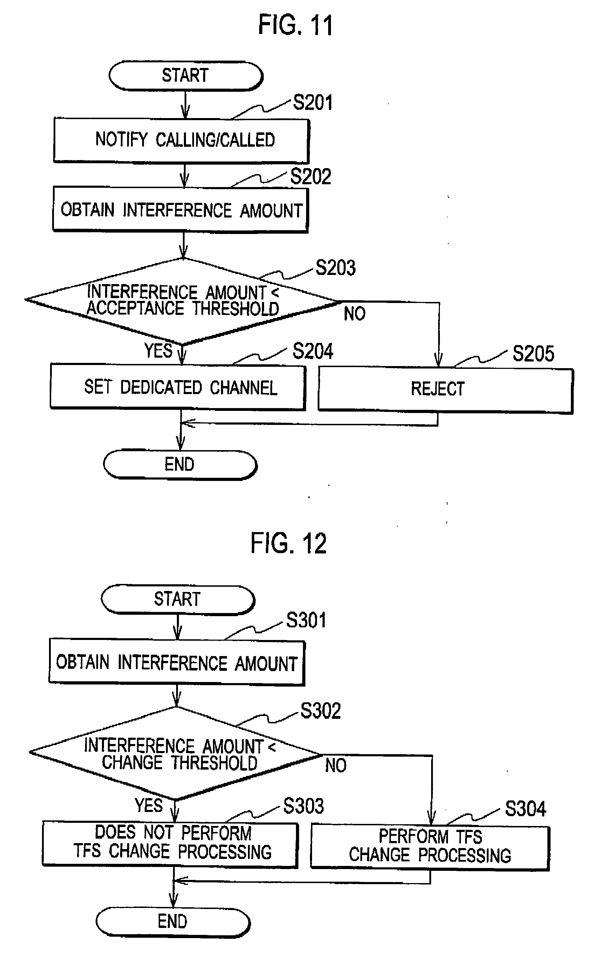

Fig. 11 shows the control procedure of call acceptance performed by the radio network control station 30.

As shown in Fig. 11, in Step S201, the radio network control station 30 receives the information related to incoming calls from the mobile stations 10a to 10c being in areas covered by the radio network control station 30 and to outgoing calls to the mobile stations 10a to 10c.

The radio network control station 30 obtains the measured value of the interference amount from the radio base station 20 in Step S202, and compares the measured value with the acceptance threshold of the interference amount in Step S203.

When the measured value of the interference amount is less than the acceptance threshold, the radio network control station 30 permits the acceptance of incoming and outgoing calls in Step S204, and instructs the radio base station 20 to set the DPDCHs and the DPCCHs.

On the other hand, when the measured value of the interference amount is equal to the acceptance threshold value or more, the radio network control station 30 rejects the acceptance of incoming and outgoing calls in Step S205.

Fig. 12 shows a transmission rate control procedure performed by the radio network control station 30.

As shown in Fig. 12, in Step S301, the radio network control station 30 obtains the measured value of the interference amount from the radio base station 20.

In Step S302, the radio network control station 30 compares the measured value with the change threshold of the interference amount (S302).

When the measured value of the interference amount is less than the change threshold, the radio network control station 30 does not change a transmission rate such as a change of a TFS in Step S303. On the other hand, when the measured value of the interference amount is equal to the change threshold or more, the radio network control station 30 instructs the radio base station 20 to change a transmission rate by changing a TFS in Step S304.

### [Effects]

According to these types of mobile communication system 100, radio base station 20, radio network control station 30 and mobile communication method, it is possible to store received baseband signals in the buffer 26 at an over-sampling level before despreading.

Then, after determining transport formats (TF), the radio base station 20 can extract the sampling data of accumulated baseband signals and perform despreading, in accordance with the determined transport formats (TF).

Consequently, it is not necessary for the radio base station 20 to perform re-despreading and to accumulate despread symbols, which are conventionally required. Accordingly, there is no need of securing the hardware resource (the buffer 226 shown in Fig. 1) for each DPDCH, and the control procedure for securing the hardware resource accompanied by the above is made unnecessary. Hence, the radio base station 20 can achieve the simplification of an apparatus by preventing the complication of the configuration and control of the apparatus and the enlargement of the size of the apparatus, and can reduce the cost of the apparatus.

Moreover, it is possible to increase the number of connections of mobile stations, that is, to increase the communication capacity of the mobile communication system 100. Especially, the radio base station 20 can increase the capacity of a radio channel by allocating a transport format (TF) with a relatively high transmission rate if a traffic volume is small, since the radio base station 20 can increase the number of mobile stations connected thereto.

In addition, the radio base station 20 can calculate the total value of transmission rates of received baseband signals in accordance with the determined transport formats, select baseband signals to be despreaded in accordance with the total value of the transmission rates, and despread the selected baseband signals.

With this, the radio base station 20 can select baseband signals to be despreaded, considering the total value of the transmission rates of the received baseband signals. Accordingly, it is possible to improve throughput compared with a case where baseband signals are not despreaded at all and are discarded.

Furthermore, it is preferable that the radio base station 20 includes a transmission rate controller unit configured to instruct mobile stations to change transmission rates in accordance with the total value of the transmission rates. With this, it is possible to change the transmission rates of baseband signals in a case where the amount of interference exceeds the permitted value and the like.

Additionally, it is not unnecessary for the radio network control station 30 to perform controls which secure the capacity of the buffer 26 of the radio base station 20 for each channel (to manage hardware resource). Thus, it is made possible to control call acceptance and transmission rates considering the amount of interference.

Hence, the radio network control station 30 can increase the number of connections of mobile stations without inviting the complication of the configuration and control of apparatus.

As described above, although the detailed descriptions have been given with the embodiment of the present invention, it is obvious for a person skilled in the art that the present invention is not limited to the embodiment described in the application. The apparatus of the present invention can be embodied as corrected and changed aspects without going beyond the gist and scope of the present invention decided by the descriptions of the scope of claims. Thus, the descriptions of the application are aimed to provide descriptions illustratively, and do not have any meaning to limit the present invention.

### [Industrial Applicability]

As described above, according to the present invention, it is possible to provide a radio base station, a radio network control station, a mobile communication system, and a mobile communication method, which are capable of increasing the number of connections of mobile stations without inviting the complication of the configuration and control of the apparatus.

## Claims

1. A radio base station comprising:
a signal storing unit configured to store baseband signals received and over-sampled;
a format determining unit configured to determine transport formats of the baseband signals; and
a despreader unit configured to despread the baseband signals stored in the signal storing unit, in accordance with the transport formats determined by the format determining unit, after the determination by the format determining unit.

2. The radio base station according to claim 1, further comprising:
a signal selector unit configured to calculate the total value of transmission rates of the received baseband signals in accordance with the determined transport formats, and to select the baseband signals to be despreaded in accordance with the total value of the transmission rates; wherein
the despreader unit is configured to despread the baseband signals selected by the signal selector unit.

3. The radio base station according to claim 2, wherein the signal selector unit is configured to despread all baseband signals, when the total value of the transmission rates are less than a total value threshold.

4. The radio base station according to claim 2, further comprising a transmission rate controller unit configured to instruct a mobile station to change the transmission rate in accordance with the total value of the transmission rates.

5. A radio network control station comprising:
a controller unit configured to control at least one of acceptance of a call related to a mobile station or a transmission rate of a received and over-sampled baseband signal which is stored in a signal storing unit included in a radio base station, in accordance with the amount of interference between the radio base station and the mobile station, without using an accumulated amount of the baseband signal storing unit.

6. A mobile communication system comprising:
a radio base station configured to include a signal storing unit configured to store a received and over-sampled baseband signal, to determine a transport format of the baseband signal, and to despread the baseband signal stored in the signal storing unit in accordance with the determined transport format after the determination; and
a radio network control station configured to control at least one of acceptance of a call related to a mobile station or a transmission rate of the baseband signal, in accordance with the amount of interference between the radio base station and the mobile station without using an accumulated amount of the baseband signal storing unit.

7. A mobile communication method comprising:
storing a received and over-sampled baseband signal in a signal storing unit;
determining a transport format of the baseband signal; and
despreading the baseband signal stored in the signal storing unit in accordance with the determined transport format after the determination.
